**Europäisches Patentamt**

**European Patent Office**

**Office européen des brevets**

(19)

(11) Veröffentlichungsnummer: **0 006 666**
**B1**

(12) # EUROPÄISCHE PATENTSCHRIFT

(45) Veröffentlichungstag der Patentschrift:
17.02.82

(51) Int. Cl.³: **A 01 B 1/06**

(21) Anmeldenummer: **79200326.1**

(22) Anmeldetag: **21.06.79**

(54) **Schaufelrechen.**

(30) Priorität: **26.06.78 NL 7806870**

(43) Veröffentlichungstag der Anmeldung:
**09.01.80 Patentblatt 80/1**

(45) Bekanntmachung des Hinweises auf die Patenterteilung:
**17.02.82 Patentblatt 82/7**

(84) Benannte Vertragsstaaten:
**AT BE CH DE FR GB IT SE**

(56) Entgegenhaltungen:
**DE-B-1 233 189**
**DE-C-333 415**
**GB-A-262 012**
**GB-A-622 777**
**GB-A-838 249**
**US-A-1 809 743**

(73) Patentinhaber: **Van Rooijen-Nieuwenhuijs, Bertha Maria,
Assumburgstraat 22, NL-4834 KP Breda (NL)**

(72) Erfinder: **Van Rooijen, Rudolf Jan Adriaan Maria,
Assumburgstraat 22, NL-4834 KP Breda (NL)**

(74) Vertreter: **Meijer, Cornelis Adrianus, Octrooibureau Ir.
C.A. Meijer Herengracht 317 Postbus 3690, NL-1016 AV
Amsterdam (NL)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Schaufelrechen

Die Erfindung bezieht sich auf ein Gartenwerkzeug zum Schaufeln und Rechen. Ein zum Schaufeln und zum Rechen bekanntes Gartenwerkzeug wird in der GB-A 262 012 beschrieben, bestehend aus einer weitmaschigen, rechteckigen, korbförmigen Konstruktion mit mehr oder weniger länglichem Axialschnitt aus streifen- oder drahtförmigen Material, die in der Deckfläche einen nahezu radialen Verlauf haben, von welcher Deckfläche Zinken sich niederwärts erstrecken. Ein Nachteil dieser bekannten Art von Gartenwerkzeug besteht darin, daß die Pflanzen, zwischen denen man das Unkraut durch das Bewegen des Schaufelns entfernen will, meistens durch die Enden der Zinken berührt und beschädigt werden. Auch die rechteckige Form der Deckfläche kann zur Beschädigung von benachbarten Pflanzen führen. Um dies nach Möglichkeit zu vermeiden, muß behutsam geschaufelt werden, wodurch das Schaufeln mit dem bekannten Schaufelwerkzeug zeitraubend und besonders ermüdend ist.

Die Erfindung bezweckt, ein Schaufelwerkzeug zu erhalten, das die oben beschriebenen Nachteile nicht besitzt. Zu diesem Zweck kennzeichnet sich das Werkzeug gemäß der Erfindung dadurch, daß die korbförmige Konstruktion in Draufsicht eine runde Form zeigt und die Zinken innerhalb der Unterfläche des Korbs radial einwärts gerichtet sind. Durch die runde Korbform und die radial nach innen gerichteten Zinken wird das Hängenbleiben an den Pflanzen, zwischen denen man das Werkzeug gemäß der Erfindung bewegt, beträchtlich verringert.

Bei einer bevorzugten Ausführungsform des Schaufelwerkzeugs gemäß der Erfindung sind die Eckbereiche zwischen den Streifen oder Drähten der Deckfläche und den vertikal verlaufenden Streifen oder Drähten durch ringsum verlaufendes streifen- oder drahtförmiges Material, zum Beispiel Runddraht, miteinander verbunden. Hierdurch werden Beschädigungen von Pflanzen in noch höherem Maße vermieden; man kann das Werkzeug gemäß der Erfindung sogar in mehr oder weniger hochgekippter Stellung benutzen, wobei man leicht zwischen nahe beieinander stehenden Pflanzen hindurchmanövrieren kann, während die Schaufelwirkung vollständig erhalten bleibt. Kennzeichnend ist ebenfalls, daß man auch schräg nach links oder rechts arbeiten kann, wobei die Bodenbehandlung exakt dieselbe bleibt, was mit dem bekannten Schaufelrechen nicht möglich ist. Im besonderen ist diese Möglichkeit vorhanden wenn der Stiel in einem exzentrischen Punkt an der Deckfläche des Korbs befestigt ist.

Das erfundene Schaufelwerkzeug bietet gegenüber dem bekannten Werkzeug noch einen weiteren Vorteil, der darin besteht, daß nach dem Schaufeln mit dem Werkzeug gemäß der Erfindung der Boden eine gleichmäßig gelockerte Oberfläche aufweist, so daß der Boden nicht, wie das bei Benutzung des bekannten Werkzeugs der Fall ist, anschließend geharkt zu werden braucht. Das Werkzeug bewirkt also zwei Bodenbehandlungen gleichzeitig, nämlich Schaufeln und Rechen, so daß das Werkzeug gemäß der Erfindung als eine Schaufelrechen bezeichnet werden kann.

Nach einer bevorzugten Ausführungsform des Schaufelrechens ist der Korb aus Runddraht zusammengestellt, wobei die einwärts gerichtete Zinken der unteren Fläche, z. B. durch Walzen oder Schärfen abgeplattet sind, und so das Abschneiden wesentlich erleichtert wird.

Nach einer bevorzugten Ausführungsform ist der Stiel exzentrisch an der Deckfläche des Korbs befestigt, wodurch, wenn der Stiel leicht gedreht wird, eine Ausdehnung des Aktionsradius des Schaufelrechens erzielt wird.

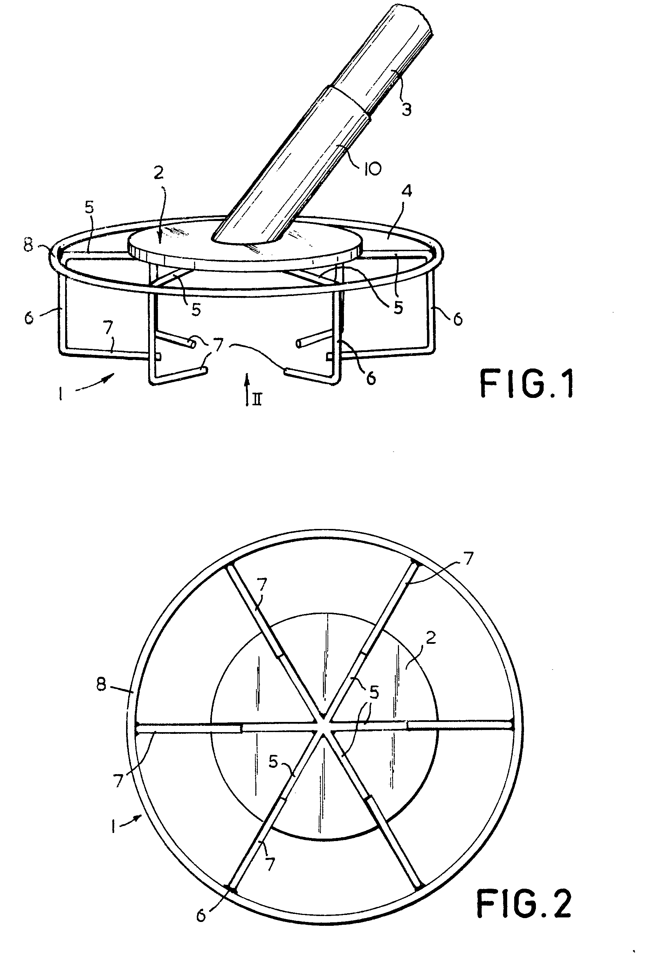

Zur Verdeutlichung der Erfindung wird unter Verweisung auf die Zeichnung ein Ausführungsbeispiel beschrieben.

F i g. 1 ist eine perspektivische Ansicht des Schaufelrechens gemäß der Erfindung, der mit einem Stiel zu seiner Hantierung versehen ist.

F i g. 2 ist eine Unteransicht entsprechend dem Pfeil II in F i g. 1.

Eine korbförmige Konstruktion 1 ist aus Runddraht, zum Beispiel rostfreiem Federstahl, aufgebaut; diese Konstruktion ist an einer Mittelscheibe 2 aufgehängt. Diese Scheibe 2 ist mit bekannten Mitteln wie einer kegelförmigen Buchse 10 mit einem Stiel 3 verbunden. Von der Scheibe 2 läuft der Runddrant in der Deckfläche 4 radial nach außen (Abschnitte 5), wo er vertikal nach unten abbiegt (Abschnitte 6); die Abschnitte 6 wiederum weisen an ihren Unterseiten nach innen gerichtete Zinken 7 auf.

Die Eckbereiche zwischen den Abschnitten 5 und 6 sind miteinander durch einen Ring 8 verbunden, der ebenfalls aus Runddraht besteht.

**Patentansprüche**

1. Gartenwerkzeug zum Schaufeln und Rechen, bestehend aus einer weitmaschigen, korbförmigen Konstruktion (1) mit mehr oder weniger länglichem Axialschnitt aus streifen- oder drahtförmigen Material (5, 6, 7'') wie Runddraht, wobei die Streifen oder Drähte (5, 6, 7) in der Deckfläche (2, 5) der Korbform einen radialen oder nahezu radialen Verlauf haben und von der Deckfläche (2, 5) sich Zinken (7) erstrecken, dadurch gekennzeichnet, daß die korbförmige Konstruktion (2, 5) in Draufsicht eine runde Form zeigt und die Zinken (7) innerhalb der Unterfläche des Korbs (1) radial einwärts gerichtet sind.

2. Gartenwerkzeug gemäß Anspruch 1, dadurch gekennzeichnet, daß die Eckbereiche zwischen den Streifen oder Drähten (5) der Deckfläche (2, 5) und den vertikal verlaufenden Streifen oder Drähten (6) ringsum verlaufendes streifen- oder drahtförmiges Material (8) zum Beispiel Runddraht, miteinander verbunden sind.

3. Gartenwerkzeug gemäß Anspruch 1 oder 2, dadurch gekennzeichnet, daß die einwärts gerichtete Zinken (7) der Unterfläche des Korbs (1) durch Walzen oder Schärfen abgeplattet sind.

4. Gartenwerkzeug gemäß den Ansprüchen 1 – 3, dadurch gekennzeichnet, daß der Stiel (10) in einem exzentrischen Punkt an der Deckfläche (2, 5) des Korbs (1) befestigt ist.

## Claims

1. Gardening tool for hoeing and raking consisting of a wide-mazed, basket-shaped construction (1), the axial section whereof is more or less oblong, which construction is made from strip or wire material (5, 6, 7) of the upper horizontal plane (2, 5) of the basketform run more or less radially, whilst from the horizontal plane (2, 5) prongs are extending characterized in that the basket-shaped construction (2, 5) shows, seen in plain view, a circular shape and the prongs (7) of the lower horizontal plane of the basket (1) are extending radially inwardly.

2. Gardening tool according to claim 1, characterized in that the corner regions between the strips or wires (5) of the upper horizontal plane (2, 5) and the vertically positioned strips or wires (6) are connected by means of circular strips or wires (8), for instance round wires.

3. Gardening tool according to claim 1 or 2, characterized in that the inwardly extending prongs (7) of the lower horizontal plane of the basket (1) are flattened, by means of rolling or grinding.

4. Gardening tool according to claim 1 – 3, characterized in that the handle (10) is connected to the upper horizontal plane (2, 5) in such a way as to be eccentric to the central axis of the basket (1).

## Revendications

1. Ustensile de jardinage pour le sarclage et le râtelage, consistent en une construction en corbeille à mailles larges à section axiale oblonge fabriquée en matière telle de bande ou fil (5, 6, 7), par exemple du fil ronde, étant les bandes ou fils (5, 6, 7) de la surface superieure (2, 5) de la corbeille orientés en raidale ou presque radiale tandis que, la surface superieure (2, 5) présente des saillies (7) characterisé en ce que la construction (2, 5) en corbeilee presenté une forme ronde, vu d'en haut et que les saillies (7) de la surface inferieure de la corbeille (1) sont orientés en dedans.

2. Ustensile de jardinage selon la revendication 1, characterisé en ce que les regions des coudes situées entre les bandes ou fils (5) de la surface superieure (2, 5) et les bandes ou fils verticales (6) sont liées entre eux par matière telle bandes ou fils (8), par exemple du fil ronde.

3. Ustensile de jardinage selon la revendication 1 ou 2, characterisé en ce que les saillies (7) en la surface inferieure de la corbeille (1) lesquelles sont orientées en dedans sont applati par laminage ou par aiguisage.

4. Ustensile de jardinage selon une des revendications 1 – 3, characterisé en ce que la queue (10) est liée à un point excentrique de la surface superieure (2, 5) de la corbeille (1).

0 006 666

FIG.1

FIG.2

5